# EUROPEAN PATENT APPLICATION

(11) **EP 4 421 690 A1**
(43) Date of publication of application: **28.08.2024**
(21) Application number: 24159402.7
(22) Date of filing: 23.02.2024
(51) Int. Cl.: G06N 10/40, G06N 10/70

(54) **METHOD AND SYSTEM FOR QUANTUM COMPUTING IMPLEMENTATION**

(30) Priority: 24.02.2023 US 202363447940 P
(71) Applicant: Xanadu Quantum Technologies Inc., Toronto, Ontario M5G 2C8 (CA)
(72) Inventor: LARSEN, Mikkel Vilsboll, Toronto, ON (CA); VERNON, Zachary, Toronto, ON (CA); ALEXANDER, Rafael Nicolai, Toronto, ON (CA)
(74) Representative: Hernandez Lehmann, Aurelio

(57) **Abstract**

The disclosure provides a scalable fault-tolerant measurement-based quantum computing (MBQC) system that includes multiple source modules operably connected to multiple optical circuits through multiple optical connections. The source modules are configured to generate resource states that are stitched together by the optical circuits to generate a higher-dimensional multimode entangled state. The source modules, optical circuits, and optical connections can be configured into repeatable tiles, where each tile comprises a subset of the source modules, optical circuits, and optical connections. The optical circuits are further configured to perform projective measurements on the multimode entangled state, such that a variety of quantum error correction codes may be implemented.

## Description

### CROSS-REFERENCE TO RELATED APPLICATIONS

This application claims the benefit of, and priority to, U.S. Provisional Patent Application No. 63/447,940, filed February 24, 2023, and titled "METHOD AND SYSTEM FOR QUANTUM COMPUTING IMPLEMENTATION", the entire contents of which are incorporated herein by reference for all purposes.

### BACKGROUND OF THE INVENTION

The present disclosure relates to photonic quantum computing, and more particularly to systems configured to implement measurement-based quantum computation.

One of the challenges facing the quantum computing industry today is the ability to scale up infrastructure to incorporate increasing numbers of quantum bits (qubits) in response to demanding computational power requirements without compromising performance and accuracy. For example, the number of qubits in even the most advanced quantum computers today is on the order of hundreds. However, practical applications in fields such as cryptography, finance, and material science demand hundreds of thousands or even millions of qubits. Meaningful scalability can only be achieved in the context of a fault-tolerant architecture.

Fault tolerance has yet to be achieved in quantum computing. With sufficiently low physical qubit error rates, quantum error correction schemes can be used to suppress logical qubit errors into the fault-tolerant regime. Many quantum error correction codes have been theorized in recent years. However, current limitations in the experimental hardware and manufacturing techniques used to produce and process qubits have limited the number and types of error correction codes that can be practically implemented, thereby hindering the progress towards fault tolerance, particularly with regards to physical error suppression and scalability.

Development of a quantum circuit configuration that can reliably scale a quantum error correction architecture without simultaneously increasing the physical error rate to insurmountable levels would therefore be an important step towards practical fault-tolerant quantum computation.

Accordingly, a system and method for quantum circuit configuration that, at least partially, addresses one or more of the above concerns is needed.

### SUMMARY OF THE INVENTION

In one aspect, the present disclosure relates to quantum optical circuits for generating higher-dimensional multimode entangled states, such as a three-dimensional multimode entangled state. In some embodiments, apparatus and methods for scalable quantum computation are provided where quantum optical circuit elements including a plurality of source modules may be operably coupled to a plurality of optical circuits through a plurality of reconfigurable optical connections. The reconfigurable optical connections permit increased flexibility in terms of lattice structure implementation. The reconfigurable optical connections also provide increased tolerance to fabrication error. Further, the resulting quantum computing circuit may be more readily scaled up.

In a further aspect, the plurality of source modules and optical circuits coupled by the reconfigurable optical connections may be configured into a plurality of repeatable tiles. Each tile has a number of internal connections connecting a subset of the source modules to a subset of the optical circuits, as well as a number of external connections operably connecting elements between two or more tiles.

In some further aspects, the plurality of tiles are configured to implement a quantum error correction code, including, but not limited to, a surface code, hexagonal code, color code, or Reed-Muller code.

In some further aspects, the number of internal connections is less than the number of external connections. The external connections may be configured for optically connecting to nearby tiles, thereby minimizing the overall connection length, which in turn renders the system less prone to propagation loss.

In some further aspects, the tiles are identical modular units that may lower cost of manufacturing, permit rapid deployment, and allow for ease of equipment repair.

In some further aspects, the optical connection matrix is unconstrained by the need for nearby connections, allowing for the implementation of a wider variety of quantum error correction codes.

According to a first example aspect, there is provided a quantum computing apparatus, comprising: a plurality of source modules each configured to generate resource states; a plurality of optical circuits; and a plurality of optical connections configured to operatively couple the plurality of source modules to the plurality of optical circuits by directing the resource states from a subset of the plurality of source modules to a subset of the plurality of optical circuits such that the plurality of optical circuits is configured to generate and measure a multimode entangled state that implements a quantum error correction code.

According to a second example aspect, there is provided a method, comprising: generating resource states from a plurality of source modules; operatively connecting the plurality of source modules to a plurality of optical circuits by directing the resource states of a subset of the source modules to a subset of the plurality of optical circuits through a plurality of optical connections; generating, by the plurality of optical circuits, a multimode entangled state from the resource states; and implementing a quantum error correction code by measuring the multimode entangled state.

In any of the above aspects, the plurality of source modules, the plurality of optical circuits, and the plurality of optical connections may be configured into a plurality of tiles, wherein each tile of the plurality of tiles comprises: a subset of the plurality of source modules; a subset of the plurality of optical circuits; and a subset of the plurality of optical connections.

In any of the above aspects, the subset of the plurality of optical connections may include a first plurality of connections configured to connect one or more of the subset of the plurality of source modules and/or one or more of the subset of the plurality of optical circuits to source modules and/or optical circuits of another tile and a second plurality of optical connections configured to connect the subset of source modules and the subset of optical circuits within each tile.

In any of the above aspects, a number of the first plurality of connections may be less than a number of the second plurality of connections.

In any of the above aspects, at least some of the first plurality of connections and the second plurality of connections may be optical fibers.

In any of the above aspects, the subset of the plurality of optical connections may be configured to minimize a connection length of the plurality of optical connections.

In any of the above aspects, the quantum error correction code may be a Low Density Parity Check (LDPC) code.

In any of the above aspects, the LDPC code may be any one of a surface code, color code, hexagonal code, and Reed-Muller code.

In any of the above aspects, a subset of the plurality of tiles may be identical.

In any of the above aspects, a subset of the plurality of tiles may be located along an edge of the apparatus such that one or more of the second plurality of connections of the subset of the plurality of unit cells terminate at one or more optical absorbers.

In any of the above aspects, a subset of the plurality of tiles located along an edge of the apparatus may include fewer source modules and/or optical circuits than other tiles.

In any of the above aspects, the resource states may be two-mode entangled continuous-variable states.

In any of the above aspects, the multi-mode entangled state may have a three-dimensional lattice structure in one temporal dimension and two spatial dimensions.

Any of the above aspects may further comprise configuring the plurality of source modules, the plurality of optical circuits, and the plurality of optical connections into a plurality of tiles, wherein each tile of the plurality of tiles comprises: a subset of the plurality of source modules; a subset of the plurality of optical circuits; and a subset of the plurality of optical connections.

Any of the above aspects may further comprise: configuring the subset of the plurality of source modules, the subset of the plurality of optical circuits, and the subset of the plurality of optical connections such that each tile of the plurality of tiles generates a subset of macronodes of the multimode entangled state.

In any of the above aspects, the generating of the multimode entangled state may comprise stitching the resource states in two spatial domains and one temporal domain into a three-dimensional (3D) multimode entangled state.

Any of the above aspects may further comprise configuring the subset of the plurality of optical connections to include a first plurality of connections configured to connect one or more of the subset of the plurality of source modules and/or one or more of the subset of the plurality of optical circuits to source modules and/or optical circuits of another tile and a second plurality of connections configured to connect the subset of source modules and the subset of optical circuits within each tile.

Any of the above aspects may further comprise configuring the subset of the plurality of optical connections to minimize a connection length of the plurality of optical connections.

In any of the above aspects, the multimode entangled state may implement an LDPC code including any one of a surface code, color code, hexagonal code, and Reed-Muller code.

### BRIEF DESCRIPTION OF THE DRAWINGS

Reference will now be made, by way of example, to the accompanying figures which show example embodiments of the present application, and in which:
FIG. 1 illustrates a simplified system-level block diagram of a measurement-based quantum computing system in accordance with an embodiment of the present disclosure;
FIG. 2 illustrates an example of a Gaussian Boson Sampling (GBS) source, compatible with some embodiments of the present disclosure;
FIG. 3 illustrates an example multiplexer (MUX), compatible with some embodiments of the present disclosure;
FIG. 4 illustrates a schematic representation of a resource state compatible with embodiments of the present disclosure;
FIG. 5A illustrates an exemplary embodiment of a Quantum Processing Unit (QPU) that is compatible with some embodiments of the present disclosure and may be used to implement the optical circuit in FIG. 1;
FIG. 5B illustrates a schematic diagram of the entangling operation performed by the QPU in FIG. 5A;
FIG. 6A illustrates a lattice structure of a 2-D multimode entangled state that may be constructed using macronodes generated using optical circuits such as the QPU in FIG. 5A;
FIG. 6B shows a lattice structure of a 3-D multimode entangled state that can be generated using embodiments of the present disclosure;
FIG. 7 illustrates a unit cell of the RHG lattice compatible with embodiments of the present disclosure;
FIG. 8 illustrates a partial 3-D (i.e 2+1 dimensions) multimode entangled state having an RHG lattice structure that can be generated in two spatial dimensions and one temporal dimensional by extending the unit cell of FIG. 7;
FIG. 9 illustrates an exemplary 2-D integrated circuit layout in accordance with embodiments of the present disclosure capable of generating a 3-D multimode entangled state such as the one shown in FIG. 8;
FIG. 10 illustrates an exemplary tile configuration of the 2-D integrated circuit layout shown in FIG. 9 suitable for surface code implementation in accordance with embodiments of the present disclosure;
FIG. 11 illustrates the lattice stitching performed by one of the bulk tiles shown in FIG. 10 at two consecutive time intervals;
FIG. 12 illustrates an exemplary lattice structure implementation of one embodiment of a color code suitable for quantum error correction in accordance with embodiments of the present disclosure;
FIG. 13 illustrates an exemplary embodiment of a bulk tile in accordance with embodiments of the present disclosure that may be used to generate multimode entangled states based on the lattice structure shown in FIG. 12 to implement the color code;
FIG. 14 illustrates another exemplary lattice structure implementation of the hexagonal code in accordance with embodiments of the present disclosure;
FIG. 15 illustrates an exemplary embodiment of a bulk tile in accordance with embodiments of the present disclosure that may be used to generate multimode entangled states based on the hexagonal code lattice structure shown in FIG. 14;
FIG. 16 illustrates another exemplary lattice structure implementation of the Reed-Muller code in accordance with embodiments of the present disclosure; and
FIG. 17 illustrates a flowchart of a method that may be implemented by the system in FIG. 1.

Like reference numerals are used throughout the figures to denote similar elements and features. While aspects of the invention will be described in conjunction with the illustrated embodiments, it will be understood that it is not intended to limit the invention to such embodiments.

### DETAILED DESCRIPTION OF THE INVENTION

In pursuit of scalable fault-tolerant quantum computers, photonics offers advantages in comparison to competing platforms. These advantages may include: (i) the possibility of roomtemperature computation, which allows scaling up to large numbers of qubits by adopting (with minimal modification) known silicon electronics and photonics technologies, (ii) intrinsic compatibility with communication technologies, such that high-fidelity connections can be made between multiple modules (i.e., multiple quantum computing circuits, whether photonic or otherwise) without the noisy transduction steps of other platforms, and (iii) inherent flexibility in choosing error correction codes, including high-dimension codes using the temporal degree of freedom, on the path to fault tolerance. These advantages motivate the serious consideration of photonic quantum computation system configurations.

Embodiments set forth herein include a system configuration for photonic quantum computing that, at least partially, overcomes one or more of the challenges of known systems discussed above by adopting a modular configuration that is capable of implementing one or more quantum error correction codes. In addition, the configuration described herein permits increased flexibility for connection matrix configurations which permits implementation of one or more quantum error correction codes and/or minimizes overall connection length.

Some system configurations set forth herein are implemented using a two-dimensional circuit of a photonic integrated circuit (PIC) that generates a multi-mode entangled state (which may also be referred to as a cluster state) in higher dimensions (i.e. three (3) dimensions or higher) of temporal, spatial, or a hybrid of spatial-temporal dimensions. In some preferred embodiments, the multi-mode entangled state is a three-dimensional cluster state with one temporal dimension and two spatial dimensions. The two-dimensional circuit facilitates a modular approach to quantum computing, in that PICs can be optimized for various portions of a desired computing protocol. Each multi-mode entangled state includes one or more encoded qubits (e.g. Gottesman-Kitaev-Preskill (GKP) qubits) and continuous variable (CV) modes that are stitched together into a hybrid "cluster state". As used herein, "stitching" refers to the creation/imposition of entanglement between the different modes at different lattice sites. For example, during operation of the two-dimensional circuit, non-deterministically generated encoded qubits and non-Gaussian states of light can be stitched into a random but known subset of the sites (by virtue of them being generated at random subset of locations, while not being generated at other locations), while the remaining sites are populated with deterministically generated Gaussian states, such as squeezed vacuum states for example. An indication of whether or not a location is within the subset of the sites is provided. The encoded qubits carry the quantum information and are used for quantum error correction.

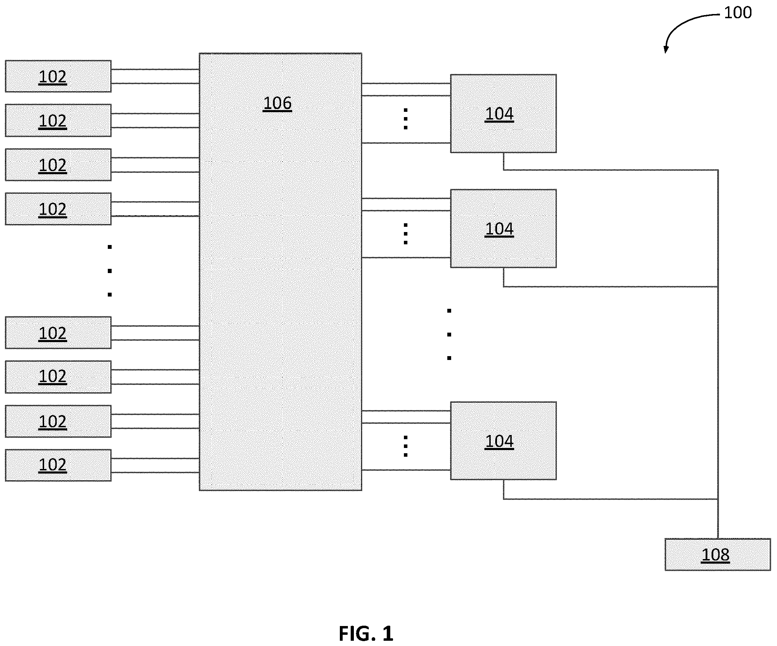

FIG. 1 illustrates a simplified system-level block diagram of a measurement-based quantum computing system 100. The system 100 includes a plurality of source modules 102 operably coupled to a plurality of optical circuits 104 through a connection matrix 106. The system 100 further includes a local pulse train generator 108 operably coupled to one or more of the optical circuits 104. The optical circuits 104 may also be coupled to a controller (not shown). Each of the source modules 102, optical circuits 104, a connection matrix 106, local pulse train generator 108, as well as the optical circuit controller represents logical functionality that can be implemented using hardware, software, or a combination thereof. The local pulse train generator 108 is configured to generate a train of local optical pulses that are also referred to as a local oscillator (LO) signal that is operably coupled to each of the optical circuits 104, and particularly to the optical detectors (e.g. homodyne detectors) used for projective measurements in the generation of multimode entanglement and for measurement-based quantum computation.

The source module 102 is configured to generate a plurality of initial quantum states of light, also referred to as resource states herein. In some embodiments, each source module 102 includes a combination of one or more Gaussian Boson Sampling (GBS) sources each configured to generate a continuous variable (CV) state of light, multiplexing components among other optical circuits, and a processor. "Multiplexing," as used herein, refers to the use of multiple probabilistic state devices in parallel, and the routing of a successfully generated CV state of light in any of these devices to the output. The CV state of light is any one of a single-photon state, non-Gaussian state, squeezed state, squeezed vacuum state, Gottesman-Kitaev-Preskill (GKP) state, GKP magic state, or cat state. The probability of at least one probabilistic state-generation device from the multiple probabilistic state-generation devices succeeding is higher (i.e., "boosted") as compared with the probability of a single (non-multiplexed) device succeeding. In some single GBS source modules, squeezed states of light are passed through an interferometer including phase shifters and beamsplitters before all but one of the modes are measured using photon-number-resolving (PNR) detectors. The PNR measurement is the non-Gaussian resource that allows for non-Gaussian CV states of light to be produced.

Although high-fidelity GKP state generation from a single GBS device is nondeterministic, GBS devices can be multiplexed to obtain higher rates and fidelities of GKP state generation and increasing amounts of hardware resource modules can be used to increase the rates and fidelities of the generated states. The multiplexing of GBS devices can be used in conjunction with the non-Gaussian resource of PNRs to increase the probability of the probabilistic generation of the arbitrary logical single-qubit states for bosonic encodings such as those of the GKP and/or cat basis.

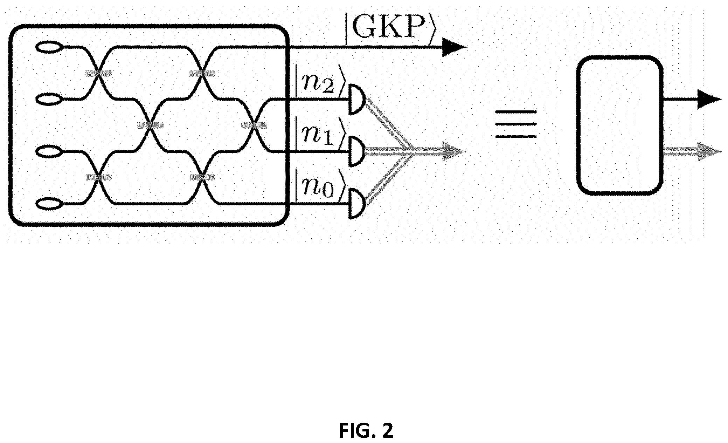

FIG. 2 shows an example of a GBS source, compatible with some embodiments of the present disclosure. Additional details regarding GBS source modules can be found, by way of example only, in U.S. Patent No. 11,341,428 to Bourassa et al., entitled "Scalable Photonic Quantum Computing with Hybrid Resource States", the entire contents of which are incorporated by reference herein for all purposes. Referring to FIG. 2, squeezed states in different spatial modes enter an interferometer, and all but one (i.e., *n₀* through *n₂*) are sent to PNR detectors. The double lines represent classical logic, which can be used to trigger a switch on the emitted port. The right portion of FIG. 2 is a simplified representation of a single GBS device.

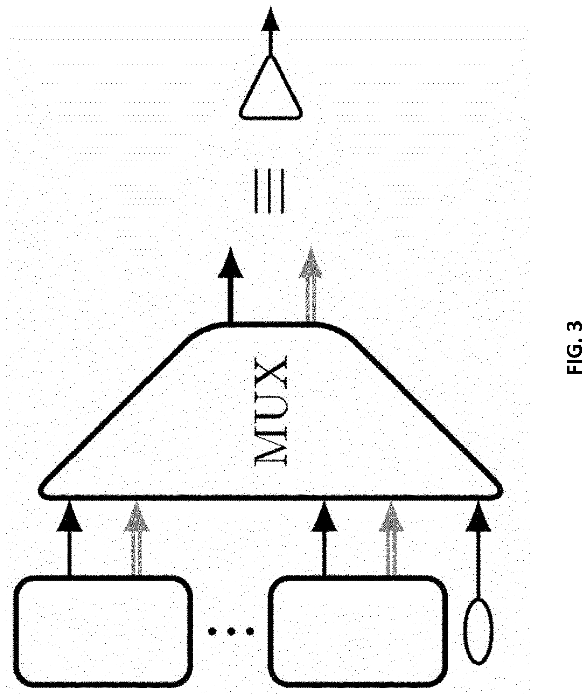

A multiplexer (MUX), including a network of reconfigurable beamsplitters heralded on the PNR outcomes, shuttles the output of a successful GBS source to the next component. In the event that all GBS source modules attached to a given MUX fail, the output of the MUX can be "swapped out" for a squeezed state of light, which can be produced deterministically. FIG. 3 shows an example multiplexer (MUX), compatible with some embodiments of the present disclosure. The output states of several GBS source modules (depicted on the left, similar to as shown in FIG. 2) and one squeezed vacuum state (depicted as an oval) are input to the MUX. If at least a single GBS source heralds a finite-energy GKP state, then that state is output. Otherwise, the squeezed vacuum state is output.

The source module 102 is further configured to entangle, through static linear-optical circuit components including beamsplitters (for example, static 50:50 beamsplitters), pairs of generated CV states of light into a two-mode entangled CV state, which is also referred to herein as a resource state.

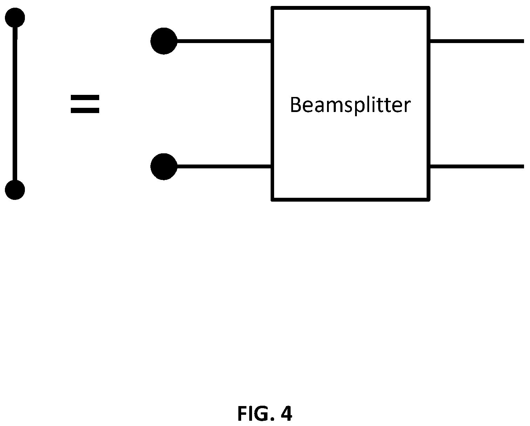

FIG. 4 illustrates a schematic representation of a resource state compatible with some embodiments of the present disclosure. Each resource state includes two CV states of light that interact at a beamsplitter, such as a static 50:50 beamsplitter. Depending on the choices of the two states that are entangled, a variety of different entangled resource states can be implemented. For example, the resource state may include (a) both modes are suitable squeezed states (e.g. an entangled two-mode squeezed state); (b) one mode is a squeezed state and one mode is a selected GKP state (e.g. a hybrid two-mode entangled state), or (c) both modes are selected GKP states (e.g. a two-mode entangled GKP state).

The source module 102 as described above can provide a steady supply of resource states of light to the optical circuits 104 routed through a reconfigurable connection matrix 106. The reconfigurable connection matrix 106 includes one or more optical communication channels that may be implemented using optical fibers compatible with existing optical technologies, which may have a lower level of propagation loss compared to on-chip waveguides. In some embodiments, the source modules and optical circuits may be implemented on photonic integrated circuits (PICs). In such embodiments, the optical connections may be facilitated with optical fiber coupling to one or more points on the PIC through grating couplers or edge couplers. Accordingly, the placement of source modules and the optical circuits are unencumbered by any physical proximity requirements. For example, in superconducting qubit systems, trapped-ion qubit systems, and other systems of local interactions, connection between components need to be within close proximity to one another in order to facilitate entanglement and to prevent decoherence. Further, for such quantum systems, scalability becomes a major challenge. For example, for superconducting qubit systems, all of the qubits must be contained within one or more cryostats. Thus, as the number of qubits increases in such systems, the size of the cryostat must also increase, or the system has to facilitate quantum communication between multiple cryostats. The capability of arbitrary physical configuration of the source modules and optical circuits provides an increased level of system reconfigurability that may permit construction of a wider variety of lattice structures that could be used to implement quantum error correction codes that were not possible before. In some embodiments, the source modules and the optical circuits may be configured unimpeded by optical connection restrictions, such as proximity requirements. In some embodiments, longer optical connections between source modules and optical circuits are possible such that a wider selection of lattice structures are possible as described in more detail below. In another aspect, the flexibility in system configuration as permitted by the reconfigurable connection matrix also provides greater tolerance against fabrication error. For example, one or more failed source modules/optical circuits on a wafer can be ignored by rerouting the optical connection to functional elements. In the more traditional systems of local interactions, one failing element could mean discarding the entire system, or rendering part of the system erroneous or unusable. Further, failed or faulty source modules and optical circuits may be more readily replaced in a functional system with minimal impact on system functionality or downtime as the connection matrix can be rerouted onto replacement source modules/optical circuits while keeping the remaining functional components in place.

A subset of the optical communication channels in the connection matrix 106 may be implemented with an optical delay line to realize temporal delays to enable time-domain stitching. In some embodiments, the optical delay lines are of the length that is set to be equal to the distance between consecutive input modes. In operation, a first mode of a first resource state generated at a first clock cycle traverses through a first optical communication channel having an optical delay line. Due to the optical delay line, it takes the first mode a full clock cycle to traverse through the first optical communication channel and arrives at a stitching element (such as an interferometer) at the same time as an optical mode of a second resource state generated at a second clock cycle. The two resource states generated at different temporal settings are entangled by passing through the interferometer.

Thus, the resource states described above can be stitched together into macronodes that form the lattice vertices of higher-dimensional multimode entangled states, including states that can be used for performing fault-tolerant quantum computation.

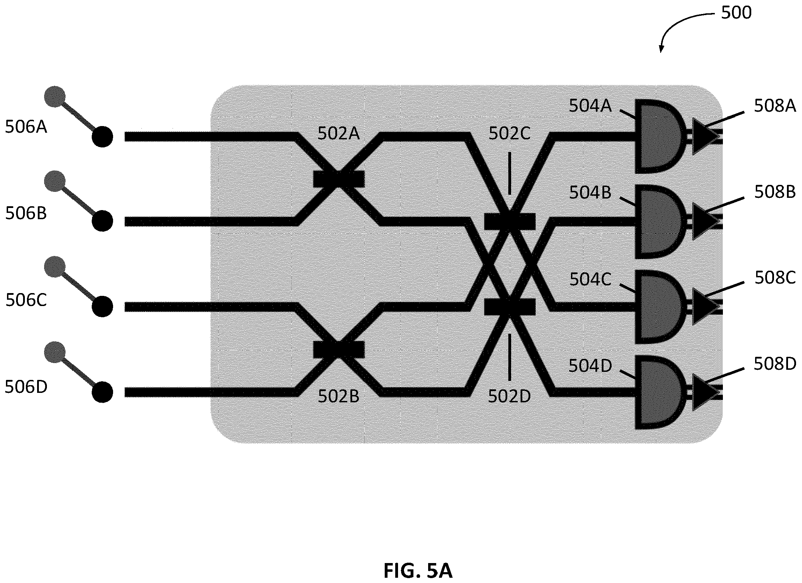

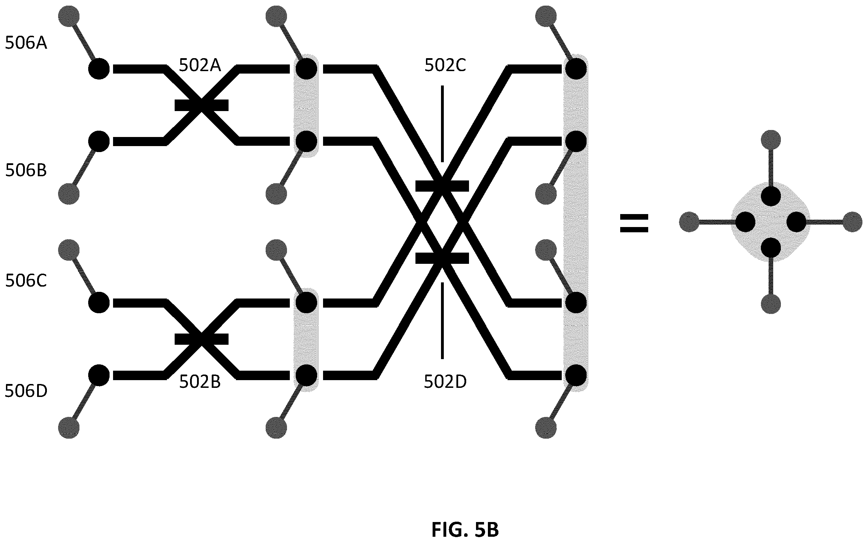

FIG. 5A illustrates an exemplary embodiment of a Quantum Processing Unit (QPU) 500 compatible with some embodiments of the present disclosure and may be used to implement the optical circuit 104. QPU 500 may be used to construct a multimode entangled state that is suitable for quantum error correction and perform measurements. The configuration of each QPU 500 may be, at least in part, dependent upon the quantum error correction code to be implemented. As shown, QPU 500 includes four interferometers 502A-D and four optical detectors 504A-D configured to stitch four input resource states 506A-D into a macronode that forms one lattice vertex of a higher-dimensional multimode entangled state, and to further perform measurement-based quantum computation. Other embodiments of the QPU may differ in the number of interferometers and optical detectors depending on the lattice structure to be achieved. As best shown in FIG. 5B, one mode in each of the resource states 506A-D is input to the QPU 500. In the illustrated embodiment, modes from resource states 506A and 506B are entangled by interferometer 502A, and modes from resource states 506C and 506D are entangled by interferometer 502B. At interferometer 502C, modes from 506A and 506C are further entangled, and similarly at interferometer 502D, modes from 506B and 506D are entangled. The resulting state from the network of interferometers 502A-D is that all input resource states 506A-D are mutually entangled into a macronode as denoted by the right side of FIG. 5B.

Measurements can be performed on the macronodes by the optical detectors 504A-D to provide electric field quadrature information (e.g. the position or amplitude quadrature referred to herein as the "q-quadrature" and the momentum or phase quadrature referred to herein as the "*p*-quadrature"). In some embodiments, the optical detectors 504A-D are homodyne detectors which can be used to perform measurements on each macronode to reduce each macronode into single nodes with multiple edges. The measurement outcomes can be used by the quantum computing system to perform error correction, and can also be utilized by the system to perform measurement-based quantum computation (MBQC). The homodyne detector is configured for performing quadrature measurements by interfering the optical modes of an input entangled resource state and the train of local optical pulses on a beamsplitter and detecting the optical power difference of the two beam splitter outputs as an indication of the modal property(ies) of the quantum state of the given optical pulse. The measurement outcomes collected on the multimode entangled states (i.e., at the physical hardware layer) can be processed together to implement one or more aspects of an error correction code. In some embodiments, the output of each optical detector 504 may be amplified with an amplifier 508.

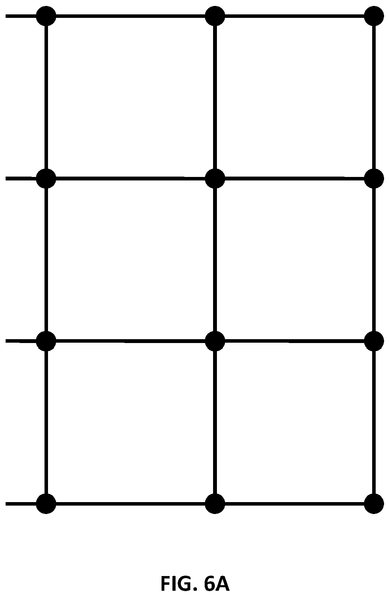

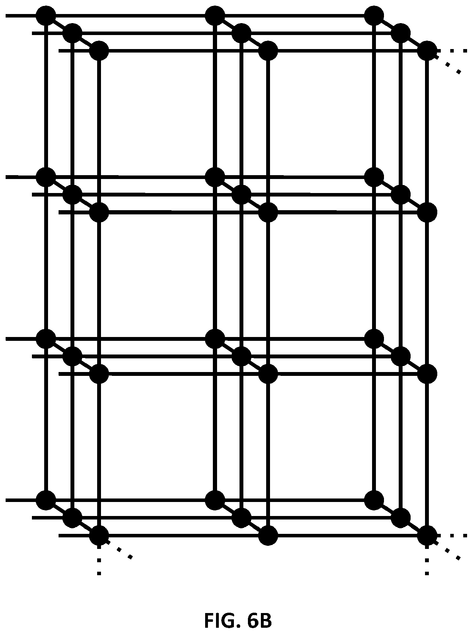

FIG. 6A shows the lattice structure of a 2-D multimode entangled state in, for example, one spatial dimension and one temporal dimension, or alternatively two spatial dimensions, that may be constructed using macronodes generated using optical circuits such as QPU 500. FIG. 6B shows the lattice structure of a 3-D multimode entangled state that can be generated in, for example, two spatial dimensions and one temporal dimension, using embodiments of the present disclosure.

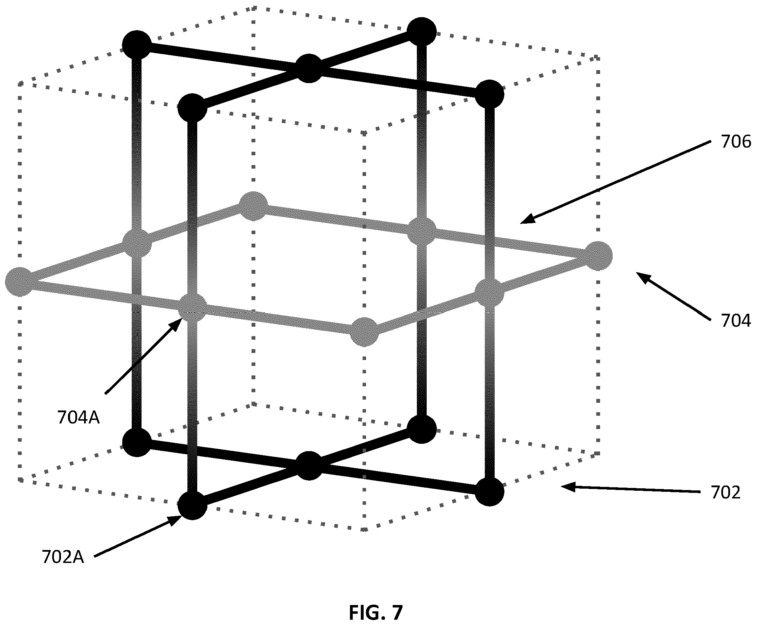

An exemplary 3-D lattice structure of a multimode entangled state suitable for quantum error correction that may be generated by some embodiments of the quantum computing system in accordance with the present disclosure is a Raussendorf-Harrington-Goyal (RHG) lattice. The RHG lattice may be suitable for implementing quantum error correction codes such as Low Density Parity Check (LDPC) codes, in particular surface codes. One or more other lattices suitable for fault-tolerant quantum computing can also be generated, depending on the choice of quantum error correction code, using the quantum circuit configuration set forth herein. FIG. 7 shows a unit cell of the RHG lattice including two alternating layers 702 and 704 to implement the quadrature measurement method described above. As shown, each dot in FIG. 7 represents a macronode as may be constructed by an optical circuit, such as QPU 500, and the links/edges connecting the dots denote entanglements. The macronodes in layer 702 are shown with darker dots while the macronodes in layer 704 are shown with grey dots to better differentiate the macronodes of the two layers. Any one macronode (i.e., a junction of multiple links/edges) within the lattice may be populated by a plurality of modes (e.g. four modes from four resource states). The entire RHG lattice structure may be constructed by repeating extended versions of the two layers 702 and 704 in an alternating fashion.

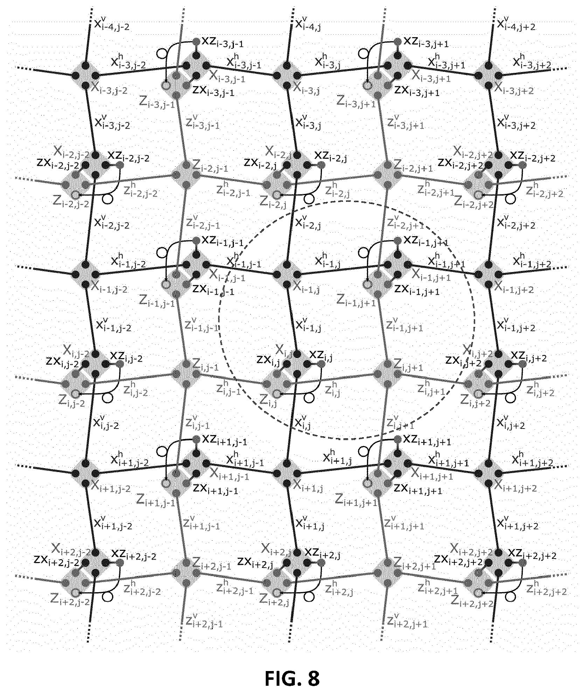

FIG. 8 shows an MBQC system configured to generate a multimode entangled state having an RHG lattice structure that may be constructed by extending the unit cell of FIG. 7. The entanglement between each pair of modes that form a resource state (e.g. the links/edges of the lattice) are labelled with a lowercase "*x*," "*z*," "*xz*," or "zx" denoting the source that produced the particular entangled resource state. The superscript "h" denotes horizontal lines while "*v*" denotes vertical lines. The subscripts "*i*" and "*j*" are notations used for numbering the relative positions in rows and columns, respectively. Each macronode, shown as a bigger grey box, is labelled with an upper case "*X*" or "Z' denoting the optical circuit that produced the particular macronode. The modes in separate lattice layers are shown as black and grey dots, respectively. The curved lines with a hollow circle denote a time delay onto the next temporal layer at the location denoted with a hollow circle within the macronode as indicated by the arrow. A lattice layer generated at time *nT*, where *n* is an integer and *T* is the separation time between successive temporal modes, would be time-stitched to a macronode generated at time (*n*+1) *T* through the time-delayed mode. The hollow location within the macronode at temporal layer *nT* would be filled by a time-delayed mode from the previous temporal layer at (*n-*1) *T*. By way of a non-limiting example, one of the modes from resource state *xz_{i,j}* is entangled within the macronode *X_{i,j}*, while the other mode of the resource state is time-delayed to be stitched into the location (e.g. as denoted by the hollow circle) within macronode *Z_{i,j}* in the next temporal layer.

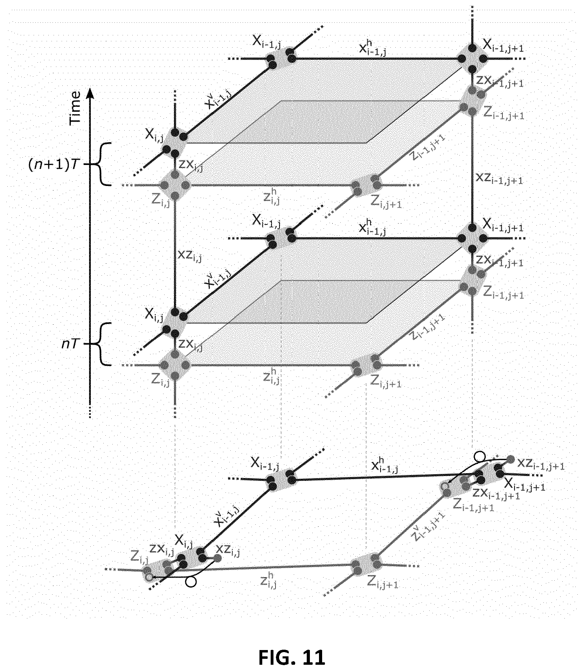

In some embodiments, alternating lattice layers, such as layers 702 and 704 in FIG. 7, may be generated as a single temporal layer. In such embodiments, macronodes such as 702A and 704A may be conceptualized as being collapsed into the same temporal layer to exist simultaneously as best shown in FIGS. 8 and 11.

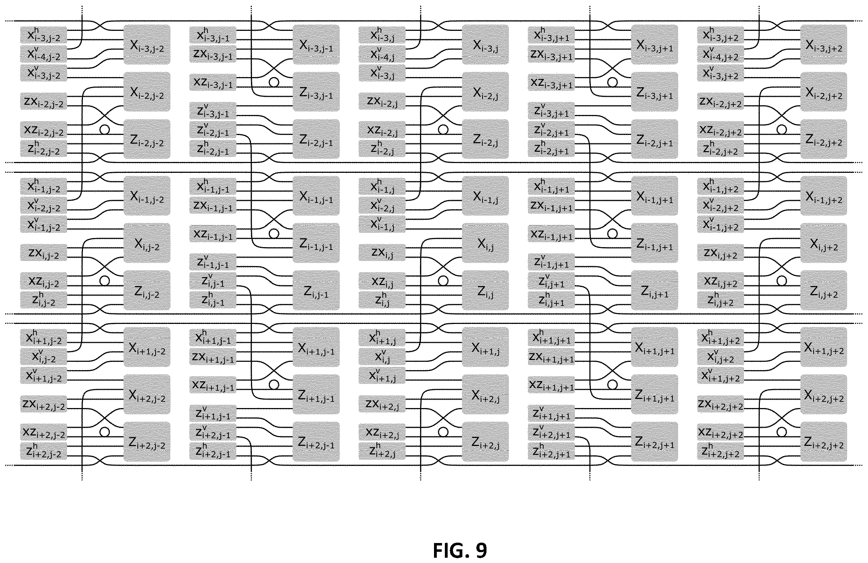

The physical implementation of the lattice structure shown in FIG. 8 includes routing the modes of resource states from one or more source modules to the corresponding optical circuits to be stitched (or entangled) into a macronode and further measured to perform measurement-based quantum computation. The adoption of photonics permits connections between source modules and optical circuits to be implemented by any suitable optical communication medium, such as fibre optical cables. In one aspect, the ability to use optical fibres permits increased freedom in connectivity such that various error correction codes of increased physical implementation complexity may be realized. FIG. 9 shows an exemplary photonic integrated circuit (PIC) layout in accordance with embodiments of the present disclosure capable of generating a 3-D multimode entangled state such as the one shown in FIG. 8. The labelling of the source modules and optical circuits in FIG. 9 correspond to those of FIG. 8. For example, the source modules in FIG. 9 (smaller grey boxes) that generated a particular link/edge in the lattice structure of FIG. 8 have the same label. Similarly, the optical circuits (larger grey boxes) and the macronodes they generate are identically labelled in both FIGS. 8 and 9. By way of a non-limiting example, the source *xz_{i,j}* has one output connected to optical circuit *X_{i,j}* and another output connected to optical circuit *Z_{i,j}* at the following clock cycle. As shown, the physical arrangement of the source modules and the optical circuits do not necessarily need to reflect the arrangement of the lattice shown in FIG. 8. As best shown in FIG. 1, rather than having the physical PIC layout reflecting the lattice structure, in some embodiments, the source modules and the optical circuits may be flexibly arranged so long as the entanglements of the lattice structure are preserved.

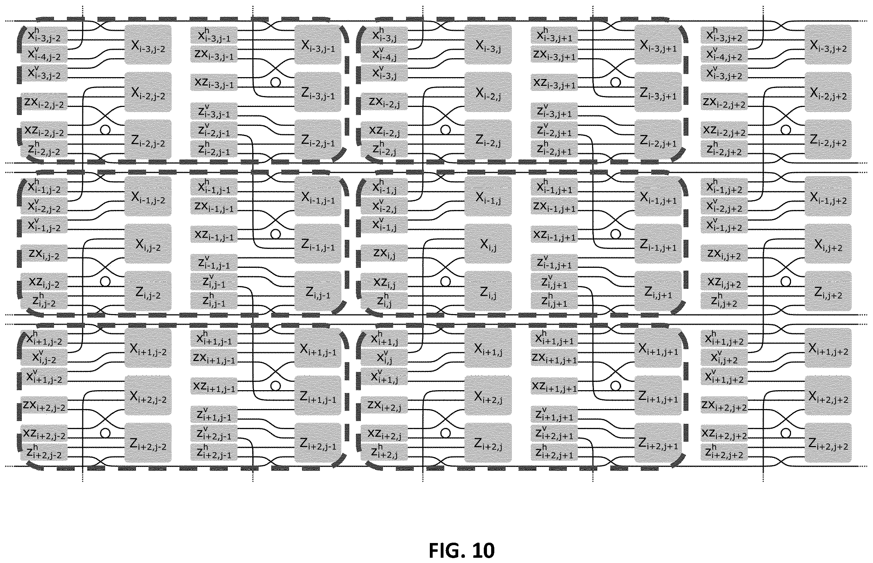

In accordance with one aspect of the present disclosure, the circuit layout of a PIC may be configured, either conceptually or physically, into tiles. The tile configuration, in one aspect, may construct a lattice structure capable of implementing an error correction code. FIG. 10 illustrates an exemplary tile configuration of the integrated circuit layout shown in FIG. 9 suitable for surface code implementation in accordance with embodiments of the present disclosure.

In the illustrated embodiment in FIG. 10, each tile is configured to include 12 source modules operably connected to six optical circuits through a plurality of optical connections. It is understood that the configuration of the tiles may differ depending on the error correction code to be implemented. The optical connections associated with each tile may be grouped into two types: internal connections configured to optically connect source modules and QPUs within each tile, and external connections that extend from the inside of one tile to another tile. By way of a non-limiting example, the connection between source *zx_{i,j}* and optical circuit *X_{i,j}* is an internal connection as it is contained entirely within its tile, whereas the connection between the source *x^{v}_{i-2,j}* and optical circuit *X_{i-2,j}* is an external connection that crosses the tile boundaries denoted by the thick dashed lines. In some embodiments, when fabricated on a PIC, the internal connections may be fabricated as integrated waveguides, whereas external connections and/or time delays may be implemented using optical fibers.

In some embodiments, tiles located along edges of a PIC may have one or more external connections terminate at one or more optical absorbers where the photonic energy of incident modes are absorbed. In further embodiments, the tiles located along edges may include fewer source modules and/or fewer optical circuits. Hence, tiles with external connections fully connected to other tiles may be referred to as "bulk tiles" and tiles located along edges of the photonic quantum circuit may be referred to as "edge tiles". In some embodiments, the homodyne measurement results from edge tiles may be discarded. In one aspect, the repeatability of the bulk tiles and edge tiles advantageously permits lower fabrication cost and time. Further repeated tile configuration permits faulty tiles to be readily replaced.

In some embodiments, the optical connections may be configured to minimize the overall connection length, thereby minimizing signal propagation loss of the system. In FIG. 10, optical circuits are placed adjacent to corresponding source modules. Source modules with external connections may be configured near the tile boundary, on or near the side of the nearby tile where the optical circuit it connects to is located. In some embodiments, the number of internal connections, which typically have shorter connection lengths than the external connections, are configured to be more than the number of external connections. By way of a non-limiting example, in the embodiment shown in FIG. 10, out of a total of 24 optical connections, 16 are internal connections and 8 are external connections. The configuration of the internal and external connections may, in at least one aspect, depend on the error correction code to be implemented and its lattice structure.

FIG. 11 illustrates the lattice stitching performed by one of the bulk tiles shown in FIG. 10 at two consecutive time intervals *nT* and *(n+1)T*, where *n* is an integer and *T* is the time between two consecutive temporal modes occupied by incoming resource states. With respect to the embodiment shown in FIGS. 5A to 11, each optical circuit used to construct the macronodes, such as QPU 500 shown in FIG. 5A, includes four optical detectors. In some embodiments, the optical detectors are homodyne detectors. In one aspect, the homodyne detectors may be configured to perform suitable quadrature measurements, which are used to project into the RHG lattice, perform quantum computation, and implement error correction. For error correction purposes, the measurement outcomes from the homodyne detectors may be used to generate reliable syndrome data. As used herein, "syndrome data" refers to outcomes of measurements performed to determine whether an error has occurred, and if so, which site had the error. "Reliable" refers to outcomes obtained by performing such a measurement multiple times and polling over the outcomes to reduce the sensitivity of the outcomes to imperfections in the measurements. Additional details regarding syndrome data generation from homodyne measurements can be found, by way of example only, in U.S. Patent No. 11,341,428 which has been incorporated herein by reference.

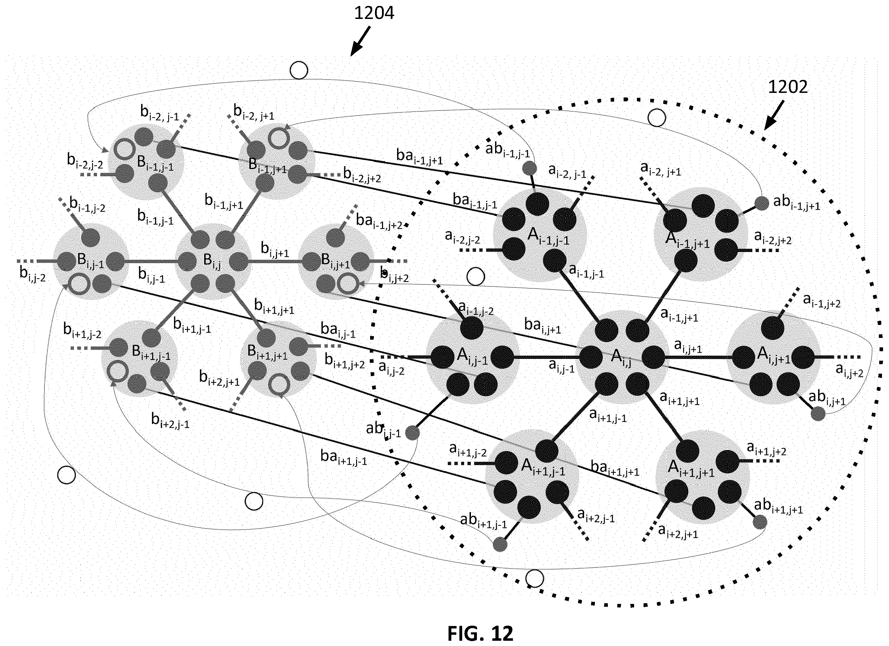

In at least one aspect, embodiments of the present disclosure advantageously provide the configurational flexibility to permit the physical implementation of quantum error correction codes with varying degrees of complexity. By way of a non-limiting example, FIG. 12 illustrates an exemplary lattice structure implementation of one embodiment of a color code suitable for quantum error correction, which was proposed in "Topological Quantum Distillation", H. Bombin and M. A. Martin-Delgado, Phys. Rev. Lett. 97, 180501 (2006) ("*Bombin*"), the disclosure of which is incorporated herein in its entirety. In some embodiments in accordance with the present disclosure, the color code may be implemented with a repeatable unit lattice structure, indicated by the dotted circle, that comprises a central macronode entangled to six auxiliary macronodes through six resource states. Each auxiliary macronode further comprises five mutually entangled optical modes from five resource states, at least one of which may be temporally stitched to the previous or subsequent temporal layer.

In some further embodiments such as the one shown in FIG. 12, two unit lattice structures may be generated in a single temporal layer. The partial 3-D lattice structure in FIG. 12 may be repeatedly extended in both the spatial as well as the temporal domain to generate a multimode entangled state suitable for implementing the color code for quantum error correction. Each unit lattice structure 1202 and 1204 includes a central macronode (also referred to as ancillary macronodes, representing ancillary qubits) *A_{i,j}* and *B_{i,j}*, respectively, each of which is entangled to six auxiliary macronodes (also referred to as data macronodes, representing data qubits). Each "A" data macronode is temporally stitched to a corresponding "*B*" data macronode as shown. The hollow grey circles within the "*B*" macronodes denote resource state modes from a previous temporal layer, and the solid grey dots with a time delay (e.g. shown as a black loop/circle on the entanglement lines) are modes that are stitched to the corresponding macronodes of the subsequent temporal layer.

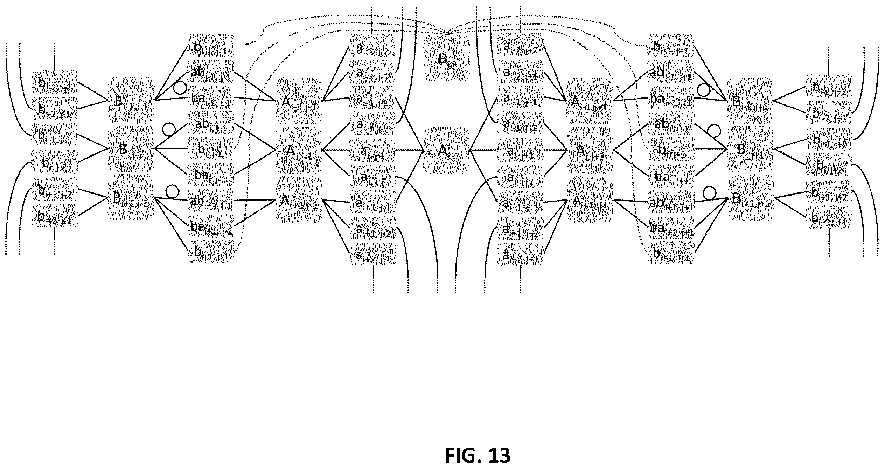

FIG. 13 illustrates an exemplary embodiment of a bulk tile in accordance with an embodiment of the present disclosure that may be used to generate multimode entangled states based on the lattice structure shown in FIG. 12 to implement the color code. Each element labelled with upper-case letters "*A*" and "*B*" denotes an optical circuit in the form of a QPU, and each element labelled with lower case letters "*a*," "*a*," "*ab*," or "*ba*" denotes source modules generating resource states. The optical connections between the source modules and QPUs implement the lattice structure shown in FIG. 12. It is noted that the particular configuration shown in FIG. 13 is not intended to be limiting, but shown as one of many possible configurations of the bulk tile that may be suited for implementation of the color code.

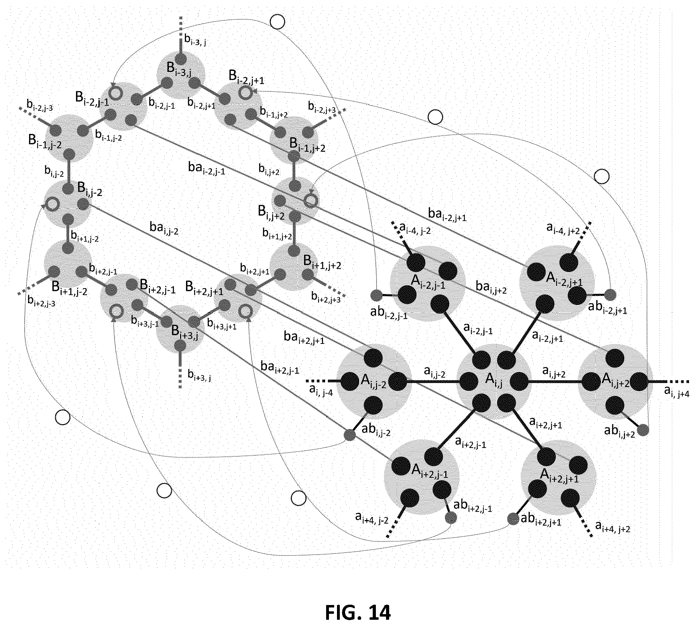

FIG. 14 illustrates another exemplary lattice structure implementation of the hexagonal code, which may provide a more symmetric encoding compared to square-shaped codes (e.g. the surface code shown in FIG. 8) for which the coherence times of all three Pauli operators are equal. Additional information on the theoretical formulations of the hexagonal code may be found in "String-net condensation: A physical mechanism for topological phases", M. A. Levin and X.-G. Wen, arXiv:cond-mat/0404617v2 [cond-mat.str-el], (April 27, 2004) ("Levin"), the disclosure of which is incorporated herein in its entirety.

In some embodiments, the hexagonal code may be implemented with two alternating layers. One embodiment of the repeatable unit lattice structures of the alternating layers is shown in FIG. 14. One of the layers, the "A" layer, includes a central ancillary macronode entangled with 6 data macronodes, and the "*B*" layer includes six ancillary macronodes and six data macronodes connected through resource state entanglements. The two alternating layers may be generated as two 2-D spatial layers at two sequential temporal layers.

In some embodiments, the two alternating layers may be generated as a single temporal layer as shown in FIG. 14. Each of the data macronodes in the "A" layer includes four optical modes, at least one of which forms a resource state with another mode that is time-delayed onto the next temporal layer (e.g. *ab_{i+2,j-1}*)*.* The "*B*" layer unit lattice structure may be conceptualized as being organized in a hexagonal ring as shown in FIG. 14. Each corner macronode (e.g. macronode *B_{i+3,j}*) is an ancillary macronode and includes three mutually entangled modes, whereas each macronode on the sides of the hexagonal ring (e.g. macronode *B_{i+2,j+1}*) is a data macronode and includes four mutually entangled modes, one of which is used for temporal stitching with a time-delayed mode from a previous temporal layer.

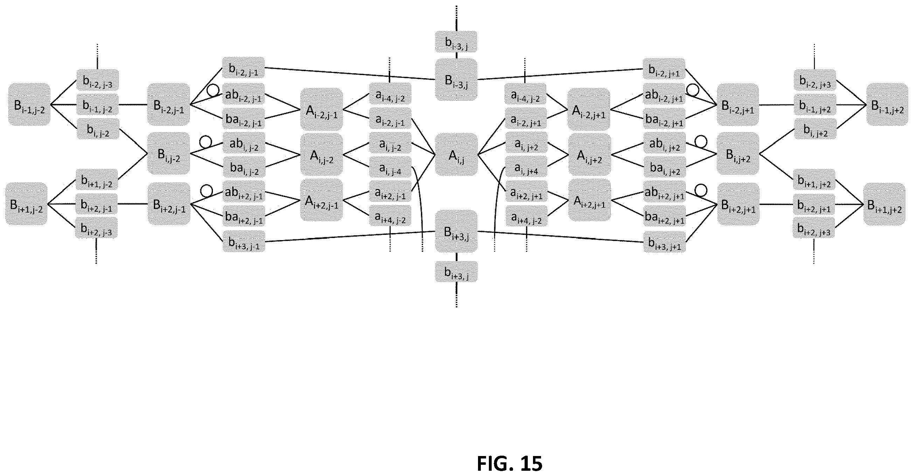

FIG. 15 illustrates an exemplary embodiment of a 2-D bulk tile in accordance with embodiments of the present disclosure that may be used to generate multimode entangled states based on the hexagonal code lattice structure shown in FIG. 14. Each element labelled with lower case letters "*a*," "*a*," "*ab*," or "*ba*" denotes source modules generating resource states. The optical connections between the source modules and QPUs implement the lattice structure shown in FIG. 14. It is noted that the particular configuration shown in FIG. 15 is not intended to be limiting, but is shown as one of many possible configurations of the bulk tile that may be suited for the implementation of the hexagonal code.

Embodiments of the present disclosure may further implement an exemplary lattice structure of the Reed-Muller code. Additional information on the theoretical formulations of the Reed-Muller code may be found in "Threshold Accuracy for Quantum Computation", E. Knill et al., arXiv:quant-ph/9610011v3, (October 15, 1996) ("Knill"), the disclosure of which is incorporated herein in its entirety.

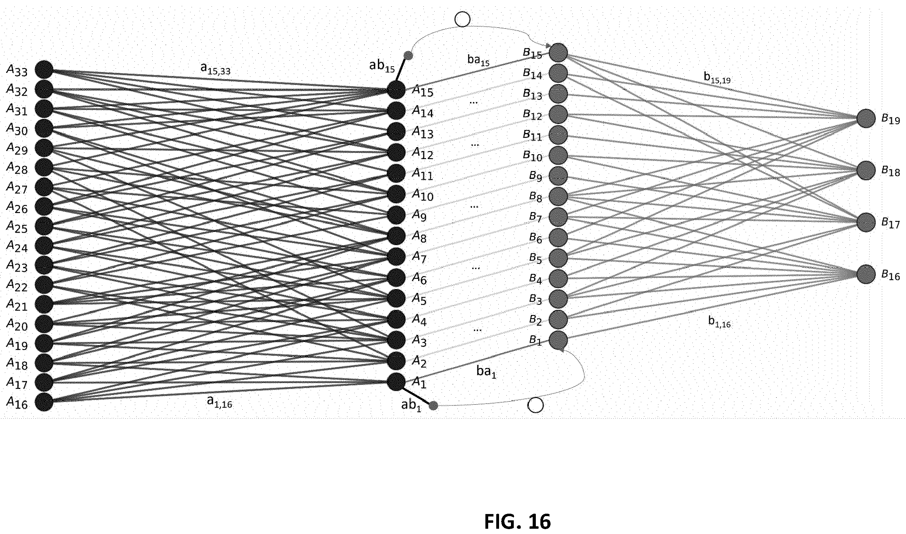

In some embodiments, the Reed-Muller code may be implemented with two alternating layers. One embodiment of the repeatable unit lattice structures of the alternating layers is shown in FIG. 16. One of the alternating layers includes 33 mutually connected macronodes with entanglement similar to the "A" macronodes shown in FIG. 16. The second of the alternating layers includes 19 macronodes mutually entangled similar to the "*B*" macronodes shown in FIG. 16.

In some further embodiments as shown in FIG. 16, the two alternating layers may be generated as a single temporal layer, which, in at least one aspect, may implement the homodyne detection scheme described herein. The temporal stitching between consecutive temporal layers is done through time-delayed resource state modes in *ab₁* and *ab₁₅* shown in FIG. 16.

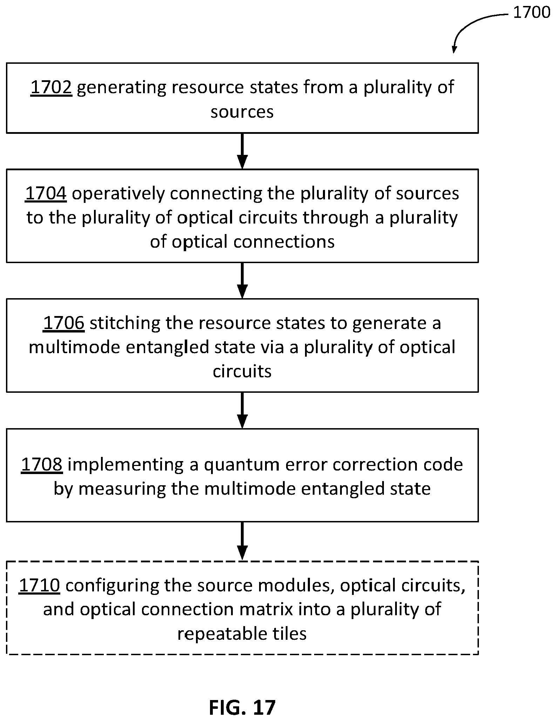

In some embodiments, a system for generating multimode entangled states includes a plurality of source modules optically connected to a plurality of optical circuits through an optical connection matrix. Each of the optical circuits can include at least one beamsplitter and at least one homodyne detector. Such a system can be configured to implement a method, such as method 1700 shown in FIG. 17. At 1702, the source modules generate a plurality of CV quantum states of light as resource states.

At 1704, the plurality of source modules are operably connected to the plurality of optical circuits by an optical connection matrix, which directs the resource states from a subset of the source modules to a subset of the plurality of optical circuits. In some embodiments, the optical connection matrix is implemented using optical fiber to permit greater flexibility in connectivity, and in turn allow more complex quantum error correction codes to be realized.

At 1706, the optical circuits, such as QPU 500, are configured to stitch the received resource states to generate a multimode entangled state. In some embodiments, each optical circuit constructs a macronode by stitching optical modes from a plurality of resource states, where each macronode forms a lattice vertex of the multimode entangled state. The optical circuits also perform stitching between macronodes in spatial and temporal domains.

At 1708, the optical circuits are configured to perform projective measurements on the multimode entangled state to facilitate MBQC. In some embodiments, the measurements are performed by optical detectors, such as homodyne detectors. The measurement outcomes collected on the optical modes in the multimode entangled states (i.e., at the physical hardware layer) can be processed together to implement one or more aspects of an error correction code, such as, for example, surface codes, color codes, the hexagonal code, the Reed-Muller code, or any other suitable code.

Optionally, at 1710, the plurality of source modules, optical circuits, and optical connection matrix may be configured into a plurality of repeatable tiles. Each of the tiles includes a number of the source modules, a number of the optical circuits, and optical connections. The optical connections within each tile may be grouped into internal connections that connect components within each tile and external connections that extend from one tile to another. The quantum error correction codes that may be implemented by the embodiments of the present disclosure include, but are not limited to, LDPC codes such as surface codes, color codes, the hexagonal code, and the Reed-Muller code. The number of source modules and optical circuits, as well as the connection pattern thereinbetween, at least in one aspect, is dependent upon the lattice structure of the error correction code.

Although the present disclosure may describe methods and processes with steps in a certain order, one or more steps of the methods and processes may be omitted or altered as appropriate. One or more steps may take place in an order other than that in which they are described, as appropriate.

Although the present disclosure may be described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution of the present disclosure may be embodied in the form of a software product. A suitable software product may be stored in a pre-recorded storage device or other similar non-volatile or non-transitory computer readable medium, including DVDs, CD-ROMs, USB flash disk, a removable hard disk, or other storage media, for example. The software product includes instructions tangibly stored thereon that enable a processing device (e.g., a personal computer, a server, or a network device) to execute examples of the methods disclosed herein.

The present disclosure may be embodied in other specific forms without departing from the subject matter of the claims. The described example embodiments are to be considered in all respects as being only illustrative and not restrictive. Selected features from one or more of the above-described embodiments may be combined to create alternative embodiments not explicitly described, features suitable for such combinations being understood within the scope of this disclosure.

All values and sub-ranges within disclosed ranges are also disclosed. Also, although the systems, devices and processes disclosed and shown herein may comprise a specific number of elements/components, the systems, devices and assemblies could be modified to include additional or fewer of such elements/components. For example, although any of the elements/components disclosed may be referenced as being singular, the embodiments disclosed herein could be modified to include a plurality of such elements/components. The subject matter described herein intends to cover and embrace all suitable changes in technology.

## Claims

1. A quantum computing apparatus, comprising:
a plurality of source modules each configured to generate resource states;
a plurality of optical circuits; and
a plurality of optical connections configured to operatively couple the plurality of source modules to the plurality of optical circuits by directing the resource states from a subset of the plurality of source modules to a subset of the plurality of optical circuits such that the plurality of optical circuits is configured to generate and measure a multimode entangled state that implements a quantum error correction code.

2. The apparatus of claim 1, wherein the plurality of source modules, the plurality of optical circuits, and the plurality of optical connections are configured into a plurality of tiles, wherein each tile of the plurality of tiles comprises:
a subset of the plurality of source modules;
a subset of the plurality of optical circuits; and
a subset of the plurality of optical connections.

3. The apparatus of claim 2, wherein the subset of the plurality of optical connections includes a first plurality of connections configured to connect one or more of the subset of the plurality of source modules and/or one or more of the subset of the plurality of optical circuits to source modules and/or optical circuits of another tile and a second plurality of optical connections configured to connect the subset of source modules and the subset of optical circuits within each tile.

4. The apparatus of claim 3, wherein a number of the first plurality of connections is less than a number of the second plurality of connections.

5. The apparatus of claim 1, wherein the plurality of optical connections are optical fibers.

6. The apparatus of claim 1, wherein the quantum error correction code is a Low Density Parity Check (LDPC) code including any one of a surface code, color code, hexagonal code, and Reed-Muller code.

7. The apparatus of claim 2, wherein a subset of the plurality of tiles are identical.

8. The apparatus of claim 2, wherein a subset of the plurality of tiles are located along an edge of the apparatus such that one or more of the second plurality of connections of the subset of the plurality of unit cells terminate at one or more optical absorbers.

9. The apparatus of claim 1, wherein the multi-mode entangled state has a three-dimensional lattice structure in one temporal dimension and two spatial dimensions.

10. A method, comprising:
generating resource states from a plurality of source modules;
operatively connecting the plurality of source modules to a plurality of optical circuits by directing the resource states of a subset of the source modules to a subset of the plurality of optical circuits through a plurality of optical connections;
generating, by the plurality of optical circuits, a multimode entangled state from the resource states; and
implementing a quantum error correction code by measuring the multimode entangled state.

11. The method of claim 10, further comprising:
configuring the plurality of source modules, the plurality of optical circuits, and the plurality of optical connections into a plurality of tiles, wherein each tile of the plurality of tiles comprises:
a subset of the plurality of source modules;
a subset of the plurality of optical circuits; and
a subset of the plurality of optical connections.

12. The method of claim 11, further comprising:
configuring the subset of the plurality of source modules, the subset of the plurality of optical circuits, and the subset of the plurality of optical connections such that each tile of the plurality of tiles generates a subset of macronodes of the multimode entangled state.

13. The method of claim 10, wherein the generating of the multimode entangled state comprises stitching the resource states in two spatial domains and one temporal domain into a three-dimensional (3D) multimode entangled state.

14. The method of claim 11, further comprising configuring the subset of the plurality of optical connections to include a first plurality of connections configured to connect one or more of the subset of the plurality of source modules and/or one or more of the subset of the plurality of optical circuits to source modules and/or optical circuits of another tile and a second plurality of connections configured to connect the subset of source modules and the subset of optical circuits within each tile.

15. The method of claim 11, further comprising configuring the subset of the plurality of optical connections to minimize a connection length of the plurality of optical connections.

16. The method of claim 10, wherein the multimode entangled state implements an LDPC code including any one of a surface code, color code, hexagonal code, and Reed-Muller code.
